# EUROPEAN PATENT SPECIFICATION

(11) **EP 3 251 926 B1**
(45) Date of publication and mention of the grant of the patent: **08.09.2021**
(21) Application number: 17174610.0
(22) Date of filing: 06.06.2017
(51) Int. Cl.: B62J 7/04, B62J 9/23, B62J 9/24, B62J 9/27

(54) **BICYCLE BAG**
FAHRRADTASCHE
SACOCHE DE BICYCLETTE

(30) Priority: 03.06.2016 DE 202016003519 U
(43) Date of publication of application: 06.12.2017
(73) Proprietor: Invented Here B.V., 7071 AA Ulft (NL)
(72) Inventor: Henrikus, Marthijn Marinus Gerardus, 7071 AA Ulft (NL); Bruntink, Danny Jan Willy, 7071 AA Ulft (NL); Vermeer, Reani Ingrid, 7071 AA Ulft (NL); Mollema, Steffen Koendert Oege, 7071 AA Ulft (NL); van Middendorp, Christianne Mariandel, 7071 AA Ulft (NL)
(74) Representative: V.O.

(56) References cited:
- DE-U1-202007 011 990
- NL-A- 8 503 496
- NL-C- 83 446
- NL-C- 96 105
- US-A- 299 609
- US-A- 5 890 639

## Description

The invention relates to a bicycle bag of the type in which the bicycle bag comprises at least one suspension flap, wherein the at least one suspension flap is configured for providing an attachment condition of the bicycle bag in which the bicycle bag is attached relative to a luggage carrier rack of a bicycle, in such manner that the bicycle bag via the at least one suspension flap is suspended from the luggage carrier rack, while storage space of the bicycle bag is extending on one or both lateral sides of the bicycle.

Luggage carrier racks of bicycles exist in various types as regards their configurations and dimensions. The basic structure of many of these luggage carrier racks has two mutually parallel main rod segments ("side rods"), which are transversely interconnected by a number of thinner and shorter rods ("transverse rods").

Furthermore, there do exist various types of quick-coupling systems for luggage carrier racks. Such a quick-coupling system is meant to quickly attach an accessory, such as a bicycle basket, to a luggage carrier rack. For that purpose a quick-coupling system comprises a first quick-coupling element and a second quick-coupling element. The first quick-coupling element is meant to be fastened, more or less permanently, to the accessory. The second quick-coupling element may be an integral part of a luggage carrier rack. Alternatively the second quick-coupling element may be releasably fastened to various types of luggage carrier racks. Once fastened to a luggage carrier rack, the second quick-coupling element is meant to remain fastened more or less permanently to the luggage carrier rack. The first and second quick-coupling elements are configured for quick-coupling to one another, so that the accessory can easily, quickly and reliably be attached to the luggage carrier rack, as well as easily and quickly be removed therefrom.

An example of such a quick-coupling system is disclosed in DE 10 2008 044 797 B4. In fact, there do exist various other types of quick-coupling systems for luggage carrier racks, in which the first quick-coupling element and the second quick-coupling element have various other configurations and dimensions.

An example of such a quick-coupling system is disclosed in NL 96105. NL96105 discloses a double bicycle bag for mounting on a bicycle luggage carrier, wherein a bag is to hang on either side of the carrier, which bags are mutually connected by an intermediate piece extending over at least the entire width over the carrier and extending over the entire width. or practically the entire length of the bag and is provided with an opening for the passage of a fastening member. The opening in the intermediate piece is of substantially rectangular design with a width equal to or approximately equal to that of the luggage carrier and can be closed completely or almost completely by a flap, which is pivotally disposed at one end of the opening perpendicular to the bags, which flap has a width equal to or substantially equal to that of the opening and is attachable at its other end to the spacer near or at the other end of the opening.

Here, two bicycle bags are disclosed connected by a suspension flap. The suspension flap comprises two flap passageway pairs each comprising to flap passageways. Straps extend through the flap passageways, coupling the suspension flap to longitudinal rods of a bicycle rack.

It is an object of the invention to provide a solution according to which a bicycle bag of the type as initially indicated hereinabove can easily, quickly and reliably be mounted to luggage carrier racks, as well as, alternatively, to the abovementioned first quick-coupling elements of quick-coupling systems, more particularly in a universal sense for carrier racks and first quick-coupling elements of various configurations and dimensions.

For that purpose, the invention provides a bicycle bag according to the appended independent claim 1, while specific embodiments of the invention are set forth in the appended dependent claims 2-7.

Hence, the invention provides a bicycle bag comprising at least one suspension flap, wherein the at least one suspension flap is configured for providing an attachment condition of the bicycle bag in which the bicycle bag is attached relative to a luggage carrier rack of a bicycle, in such manner that the bicycle bag via the at least one suspension flap is suspended from the luggage carrier rack, while storage space of the bicycle bag is extending on one or both lateral sides of the bicycle,
wherein the at least one suspension flap comprises at least two flap passageway pairs, wherein each of said flap passageway pairs has two elongate flap passageways through the at least one suspension flap, wherein the two flap passageways are extending alongside one another in a mutually parallel manner.

Thanks to said at least two flap passageway pairs, the invention allows to apply various fastening means extending through the elongate flap passageways. For example, fastening bolts can be used as fastening means extending through the elongate flap passageways. The elongate character of such a flap passageway allows such a fastening bolt to be inserted at various different positions along the longitudinal direction of the flap passageway. In addition, thanks to the mutually parallel situation alongside one another of the two flap passageways of a flap passageway pair, it can be chosen into which one of the two flap passageways the fastening bolt is inserted. All together, the invention provides great adaptability of the locations where fastening bolt can be placed, which makes the bicycle bag widely applicable to carrier racks and first quick-coupling elements of various configurations and dimensions.

It is noted that many of the abovementioned first quick-coupling elements of quick-coupling systems are provided with multiple bolt holes for attachment of accessories thereto. Accordingly, the present invention is in particular very suitable in combination with many quick-coupling systems.

Furthermore, it is also possible to apply e.g. a buckled strap through both elongate flap passageways of each flap passageway pair, in such manner that the buckled strap holds together a part of a luggage carrier rack, such as a side rod or transverse rod of the luggage carrier rack, on the one hand, and a part of the at least one suspension flap, on the other hand.

In a preferable embodiment of a bicycle bag according to the invention, the number of said at least two flap passageway pairs is at least four. This allows for the suspension forces to be evenly distributed over the usually more or less rectangularly shaped luggage carrier racks and first quick-coupling elements of quick-coupling systems.

The bicycle bag according to the invention further comprises:
a first quick-coupling element, which comprises bolt holes for overlapping placement relative to multiple ones of said elongate flap passageways, respectively, for fastening of the first quick-coupling element to the at least one suspension flap by using fastening bolts extending through overlappingly placed combinations of the elongate flap passageways and the bolt holes,
wherein said first quick-coupling element is part of a quick-coupling system for luggage carrier racks, said quick-coupling system further comprising a second quick-coupling element, which may be part of or connectable to various types of luggage carrier racks, said first and second quick-coupling elements being configured for quick-coupling to one another.

As already explained above, the present invention is in particular very suitable in combination with many quick-coupling systems.

In a further preferable embodiment, the bicycle bag according to the invention is a one-sided bicycle bag in the sense that in said attachment condition of the bicycle bag said storage space of the bicycle bag is extending only on one of both lateral sides of the bicycle.

In a further preferable embodiment, the bicycle bag according to the invention is a two-sided bicycle bag in the sense that in said attachment condition of the bicycle bag said storage space of the bicycle bag is extending on both lateral sides of the bicycle, while said at least one suspension flap forms at least one bridge extending from parts of the bicycle bag on one lateral side of the bicycle to parts of the bicycle bag on the other lateral side of the bicycle.

In a further preferable embodiment, the bicycle bag according to the invention further comprises a handle structure, which comprises a handle for manually carrying the two-sided bicycle bag, and which further comprises multiple handle structure passageways for overlapping placement relative to multiple ones of said elongate flap passageways, respectively, for fastening of the handle structure to the at least one suspension flap by using fastening means extending through overlappingly placed combinations of the elongate flap passageways and the handle passageways. Such a handle structure can be releasably fastened to the at least one suspension flap in a very reliable and space efficient manner.

Preferably, the handle structure comprises at least two handle structure passageway pairs, wherein each of said handle structure passageway pairs has two elongate ones of said multiple handle structure passageways through the handle structure, wherein the two elongate ones of said multiple handle structure passageways are extending alongside one another in a mutually parallel manner. Thanks to these features, the above explained advantages of the at least two flap passageways are maintained when the handle structure is fastened to the at least one suspension flap.

In a further preferable embodiment, the bicycle bag according to the invention further comprises the first quick-coupling element mentioned above, so that both the first quick-coupling element and the handle structure can be fastened simultaneously to the at least one suspension flap by using multiple fastening bolts through overlappingly placed combinations of the elongate flap passageways, the handle passageways, and the bolt holes of the first quick-coupling element. Thanks to these combined features of at least the first quick-coupling element and the handle structure, an extremely comfortable way of easily, quickly and reliably attaching the bicycle bag to the luggage carrier rack, as well as of easily and quickly removing it therefrom, is obtained. This especially is very helpful when the bicycle bag is heavily loaded with luggage.

The abovementioned aspects and other aspects of the invention will be apparent from and elucidated with reference to the embodiments described hereinafter by way of non-limiting examples only and with reference to the schematic figures in the enclosed drawing.
Fig. 1 shows, in a view from above, an example, not claimed, of an embodiment of a bicycle bag, wherein the bicycle bag is shown together with buckled straps.
Fig. 2 shows, in an exploded perspective view, an example of an embodiment of the invention of a bicycle bag according to the invention, wherein the bicycle bag comprises an example of an embodiment of its abovementioned first quick-coupling element and an example of an embodiment of its abovementioned handle structure, and wherein the bicycle bag is shown together with four fastening bolts and four washers.

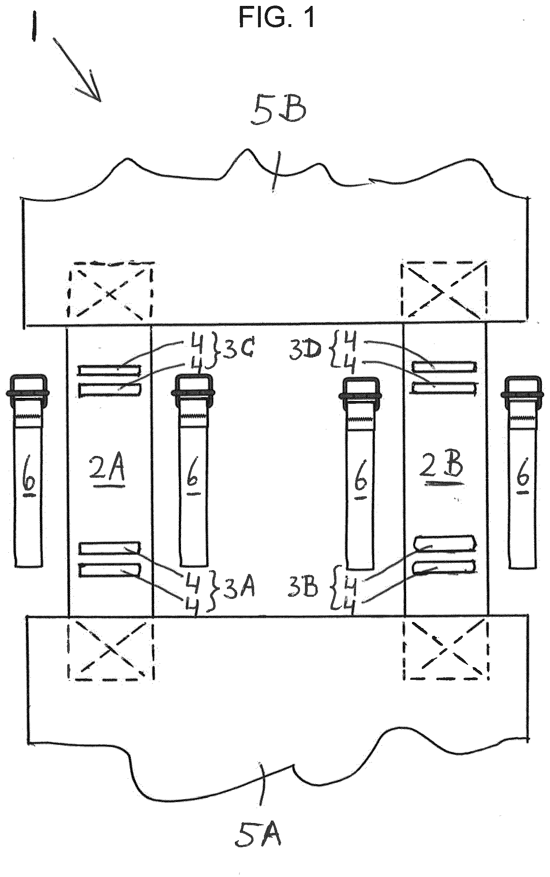

Reference is first made to Fig. 1. The bicycle bag of Fig. 1 is indicated by reference numeral 1. In the shown example, the at least one suspension flap of the bicycle bag 1 consists of the two suspension flaps 2A, 2B. The bicycle bag 1 is a two-sided bicycle bag. That is, the highly schematically shown parts 5A and 5B of the bicycle bag 1 are parts of boundary walls of the bicycle bag 1, which in the abovementioned attachment condition of the bicycle bag define storage spaces of the bicycle bag on both opposite lateral sides, respectively, of a bicycle. It is seen that each of the two suspension flaps 2A, 2B forms a bridge, which is extending from part 5A to part 5B.

In the shown example, the at least two flap passageway pairs of the bicycle bag 1 consists of the four flap passageway pairs 3A, 3B, 3C, 3D. Each of these flap passageway pairs 3A, 3B, 3C, 3D has two elongate flap passageways 4 through the suspension flap 2A or 2B concerned, wherein the two flap passageways 4 are extending alongside one another in a mutually parallel manner.

Fig. 1 further shows four separate buckled straps 6, each of which may be applied, respectively, through both elongate flap passageways 4 of each of said flap passageway pairs 3A, 3B, 3C, 3D, respectively. In the shown example, as seen in the attachment condition of the bicycle bag, the longitudinal directions of the elongate flap passageways 4 are extending in a direction parallel to the usual side rods of a usual luggage carrier rack of a bicycle. Accordingly, the four buckled straps 6, when applied in the abovementioned manner to each of the flap passageway pairs 3A, 3B, 3C, 3D, respectively, are suitable for reliably holding together the suspension flaps 2A, 2B, on the one hand, and said side rods of said luggage carrier rack, on the other hand.

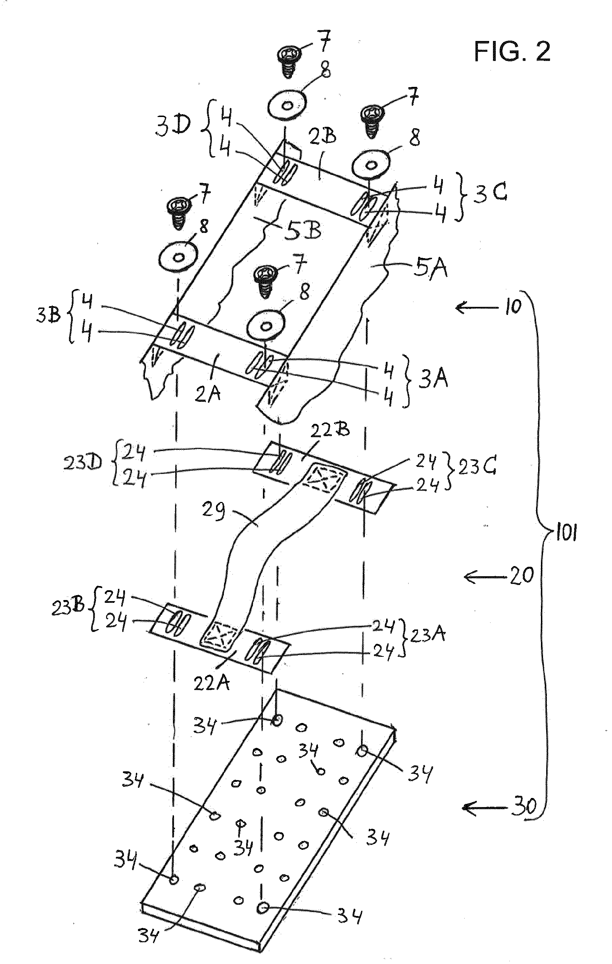

Reference is now made to Fig. 2. The bicycle bag of Fig. 2 is indicated by reference numeral 101. In the shown example, the shown part 10 of the bicycle bag 101 is the same as the bicycle bag 1 of Fig. 1. Accordingly, in Fig. 2 those parts of part 10 which are the same as the parts of the bicycle bag 1 of Fig. 1 have been indicated by the same reference numerals 2A, 2B, 3A, 3B, 3C, 3D, 4, 5A, 5B as used in Fig. 1. Furthermore, in the shown example, the handle structure of the bicycle bag 101 is indicated by reference numeral 20, while the first quick-coupling element of the bicycle bag 101 is indicated by reference numeral 30. As mentioned, the bicycle bag of Fig. 2 is shown together with four fastening bolts and four washers. It is seen that the fastening bolts are indicated by reference numeral 7, and the washers by reference numeral 8.

In the shown example, the handle of the handle structure 20 of the bicycle bag 101 is indicated by the reference numeral 29. Furthermore, the multiple handle structure passageways of the handle structure 20 are indicated by reference numerals 24. In the shown example, the handle structure passageways 24 are extending through the shown parts 22A, 22B, which are of similar shape and dimensions as the two suspension flaps 2A, 2B, respectively, of the bicycle bag 101. It is seen that the handle 29 is fixedly attached to the parts 22A, 22B of the handle structure 20.

More in particular it is seen in Fig. 2 that the handle structure 20 comprises handle structure passageway pairs 23A, 23B, 23C, 23D, wherein each of said handle structure passageway pairs has two elongate ones of the multiple handle structure passageways 24, wherein the two elongate ones of said multiple handle structure passageways 24 are extending alongside one another in a mutually parallel manner.

In the shown example, the bolt holes of the first quick-coupling element 30 of the bicycle bag 101 are indicated by the reference numeral 34.

It is noted that the first quick-coupling element 30 is shown only very schematically in Fig. 2. As mentioned, the first quick-coupling element 30 is part of a quick-coupling system for luggage carrier racks, wherein the quick-coupling system further comprises a second quick-coupling element, which may be part of or connectable to various types of luggage carrier racks, said first and second quick-coupling elements being configured for quick-coupling to one another. It is noted that the configuration of the first quick-coupling element 30 for realizing the quick-coupling to a second quick-coupling element of a quick-coupling system is not shown in the highly schematical lower portion of Fig. 2. Typically such a quick-coupling configuration would be located on the underside of the first quick-coupling element 30 shown in Fig. 2.

Fig. 2 illustrates that both the first quick-coupling element 30 and the handle structure 20 can be fastened simultaneously to the suspension flaps 2A, 2B by using the fastening bolts 7 through overlappingly placed combinations of the elongate flap passageways 4, the handle passageways 24, and the bolt holes 34 of the first quick-coupling element 30. It is noted that the bolt holes 34 may be provided with internal screw thread that corresponds to the outside screw thread of the fastening bolts 7.

Furthermore it is noted that the bicycle bag 101 of Fig. 2 may also be used without the first quick-coupling element 30. In that case, the handle structure 20 may for example be fastened to the suspension flaps 2A, 2B by applying four buckled straps 6 (see Fig. 1) through four combinations 3A+23A, 3B+23B, 3C+23C, 3D+23D, respectively, of the flap passageway pairs and the handle structure passageway pairs.

While the invention has been described and illustrated in detail in the foregoing description and in the drawing figures, such description and illustration are to be considered exemplary and/or illustrative and not restrictive; the invention is not limited to the disclosed embodiments.

For example, in the shown examples, as seen in the attachment condition of the bicycle bag, the longitudinal directions of the elongate flap passageways 4 are extending in a direction parallel to the usual side rods of a usual luggage carrier rack of a bicycle. In addition or as an alternative thereto, the longitudinal directions of certain ones of the elongate flap passageways 4 may, as seen in the attachment condition of the bicycle bag, also be extending in a direction parallel to the usual transverse rods of a usual luggage carrier rack of a bicycle, or in all kinds of inclined directions relative to said side rods and transverse rods.

Also, a bicycle bag according to the invention may have more than two or less than two suspension flaps. So, for example only one suspension flap may be applied, such as one large suspension flap, which is e.g. continuously extending from and including the extension range of the presently shown suspension flap 2A upto and including the extension range of the presently shown suspension flap 2B, or even further than that.

Furthermore, as mentioned, a bicycle bag according to the invention may also be of the one-sided type. An example of such a one-sided bicycle bag could for example be a modified version of the bicycle bag 101 of Fig. 2, in that the modified version does neither have the shown part 5B in Fig. 2 nor any other bag part on that lateral side of the bag. Hence, in that case the one-sided bicycle bag according to the invention would have all four of the shown flap passageway pairs 3A, 3B, 3C, 3D. However, it would also be possible for such a modified one-sided bicycle bag, to for example have only the shown flap passageway pairs 3A, 3B, and not the shown flap passageway pairs 3C, 3D, and optionally has correspondingly shortened versions of the two suspension flaps 2A, 2B.

Yet other variations to the disclosed embodiments can also be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single item may fulfill the functions of several items recited in the claims. For the purpose of clarity and a concise description, features are disclosed herein as part of the same or separate embodiments, however, it will be appreciated that the scope of the invention may include embodiments having combinations of all or some of the features disclosed, as long as the result of these combinations remains within the scope of the invention as defined by the subject-matter of the appended claims. The mere fact that certain measures are recited in mutually different dependent claims does not indicate that a combination of these measures can not be used to advantage. Any reference signs in the claims should not be construed as limiting the scope.

## Claims

1. A bicycle bag (101) comprising at least one suspension flap (2A, 2B),
wherein the at least one suspension flap is configured for providing an attachment condition of the bicycle bag in which the bicycle bag is attached relative to a luggage carrier rack of a bicycle, in such manner that the bicycle bag via the at least one suspension flap (2A, 2B) is suspended from the luggage carrier rack, while storage space of the bicycle bag is extending on one or both lateral sides of the bicycle,
wherein the at least one suspension flap (2A, 2B) comprises at least two flap passageway pairs (3A, 3B, 3C, 3D), wherein each of said flap passageway pairs has two elongate flap passageways (4) through the at least one suspension flap (2A, 2B) allowing fastening means to extend through said elongate flap passageways, wherein the two flap passageways (4) are extending alongside one another in a mutually parallel manner,
**characterized in that**
the bicycle bag (101) further comprises a first quick-coupling element (30), which comprises bolt holes (34) for overlapping placement relative to multiple ones of said elongate flap passageways (4), respectively, for fastening of the first quick-coupling element (30) to the at least one suspension flap (2A, 2B) by using fastening bolts (7) extending through overlappingly placed combinations of the elongate flap passageways (4) and the bolt holes (34),
wherein said first quick-coupling element (30) is part of a quick-coupling system for luggage carrier racks, said quick-coupling system further comprising a second quick-coupling element, which may be part of or connectable to various types of luggage carrier racks, said first and second quick-coupling elements being configured for quick-coupling to one another.

2. A bicycle bag according to claim 1, wherein the number of said at least two flap passageway pairs (3A, 3B, 3C, 3D) is at least four.

3. A bicycle bag according to any one of claims 1 or 2-, wherein the bicycle bag is a one-sided bicycle bag in the sense that in said attachment condition of the bicycle bag said storage space of the bicycle bag is extending only on one of both lateral sides of the bicycle.

4. A bicycle bag according to any one of claims 1 or 2-, wherein the bicycle bag (101) is a two-sided bicycle bag in the sense that in said attachment condition of the bicycle bag said storage space of the bicycle bag is extending on both lateral sides of the bicycle, while said at least one suspension flap (2A, 2B) forms at least one bridge extending from parts of the bicycle bag on one lateral side of the bicycle to parts of the bicycle bag on the other lateral side of the bicycle.

5. A bicycle bag according to claim 4, further comprising:
a handle structure (20), which comprises a handle (29) for manually carrying the two-sided bicycle bag (101), and which further comprises multiple handle structure passageways (24) for overlapping placement relative to multiple ones of said elongate flap passageways (4), respectively, for fastening of the handle structure (20) to the at least one suspension flap (2A, 2B) by using fastening means (7) extending through overlappingly placed combinations of the elongate flap passageways (4) and the handle passageways (24).

6. A bicycle bag according to claim 5, wherein the handle structure (20) comprises at least two handle structure passageway pairs (23A, 23B, 23C, 23D), wherein each of said handle structure passageway pairs has two elongate ones of said multiple handle structure passageways (24) through the handle structure (20), wherein the two elongate ones of said multiple handle structure passageways (24) are extending alongside one another in a mutually parallel manner.

7. A bicycle bag according to claim 5 or 6, wherein both the first quick-coupling element (30) and the handle structure (20) can be fastened simultaneously to the at least one suspension flap (2A, 2B) by using said multiple fastening bolts (7) through overlappingly placed combinations of the elongate flap passageways (4), the handle passageways (24), and the bolt holes (34) of the first quick-coupling element (30).

## Patentansprüche

1. Fahrradtasche (101), die wenigstens eine Aufhängungslasche (2A, 2B) umfasst, wobei die wenigstens eine Aufhängungslasche so ausgelegt ist, dass sie einen Befestigungszustand der Fahrradtasche bereitstellt, in dem die Fahrradtasche relativ zu einem Gepäckträgergestell eines Fahrrads so befestigt ist, dass die Fahrradtasche über die wenigstens eine Aufhängungslasche (2A, 2B) an dem Gepäckträgergestell aufgehängt ist, während sich der Stauraum der Fahrradtasche auf einer oder beiden seitlichen Seiten des Fahrrads erstreckt,
wobei die wenigstens eine Aufhängungslasche (2A, 2B) wenigstens zwei Laschendurchgangspaare (3A, 3B, 3C, 3D) umfasst, wobei jedes der Laschendurchgangspaare zwei längliche Laschendurchgänge (4) durch die wenigstens eine Aufhängungslasche (2A, 2B) aufweist, die es Befestigungsmitteln ermöglichen, sich durch die länglichen Laschendurchgänge zu erstrecken, wobei sich die beiden Laschendurchgänge (4) entlang parallel zueinander erstrecken,
**dadurch gekennzeichnet, dass**
die Fahrradtasche (101) ferner ein erstes Schnellkupplungselement (30) umfasst, das Bolzenlöcher (34) zur überlappenden Anordnung relativ zu mehreren der länglichen Laschendurchgänge (4) umfasst, um das erste Schnellkupplungselement (30) an der wenigstens einen Aufhängungslasche (2A, 2B) unter Verwendung von Befestigungsbolzen (7) zu befestigen, die sich durch überlappend angeordnete Kombinationen der länglichen Laschendurchgänge (4) und der Bolzenlöcher (34) erstrecken,
wobei das erste Schnellkupplungselement (30) Teil eines Schnellkupplungssystems für Gepäckträgergestelle ist, wobei das Schnellkupplungssystem ferner ein zweites Schnellkupplungselement umfasst, das Teil von verschiedenen Arten von Gepäckträgergestellen sein kann oder mit diesen verbindbar ist, wobei das erste und das zweite Schnellkupplungselement zum Schnellkuppeln miteinander ausgelegt sind.

2. Fahrradtasche nach Anspruch 1, wobei die Anzahl der wenigstens zwei Laschendurchgangspaare (3A, 3B, 3C, 3D) wenigstens vier beträgt.

3. Fahrradtasche nach einem der Ansprüche 1 oder 2, wobei die Fahrradtasche eine einseitige Fahrradtasche in dem Sinne ist, dass sich im Befestigungszustand der Fahrradtasche der Stauraum der Fahrradtasche nur auf einer der beiden seitlichen Seiten des Fahrrads erstreckt.

4. Fahrradtasche nach einem der Ansprüche 1 oder 2, wobei die Fahrradtasche (101) eine zweiseitige Fahrradtasche in dem Sinne ist, dass sich in dem Befestigungszustand der Fahrradtasche der Stauraum der Fahrradtasche auf beiden seitlichen Seiten des Fahrrads erstreckt, während die wenigstens eine Aufhängungslasche (2A, 2B) wenigstens eine Brücke bildet, die sich von Teilen der Fahrradtasche auf einer seitlichen Seite des Fahrrads zu Teilen der Fahrradtasche auf der anderen seitlichen Seite des Fahrrads erstreckt.

5. Fahrradtasche nach Anspruch 4, ferner umfassend:
eine Griffstruktur (20), die einen Griff (29) zum manuellen Tragen der zweiseitigen Fahrradtasche (101) umfasst, und die ferner mehrere Griffstrukturdurchgänge (24) zur überlappenden Anordnung relativ zu mehreren der länglichen Laschendurchgänge (4) umfasst, um die Griffstruktur (20) an der wenigstens einen Aufhängungslasche (2A, 2B) unter Verwendung von Befestigungsmitteln (7) zu befestigen, die sich durch überlappend angeordnete Kombinationen der länglichen Laschendurchgänge (4) und der Griffdurchgänge (24) erstrecken.

6. Fahrradtasche nach Anspruch 5, wobei die Griffstruktur (20) wenigstens zwei Griffstruktur-Durchgangspaare (23A, 23B, 23C, 23D) umfasst, wobei jedes der Griffstruktur-Durchgangspaare zwei längliche der mehreren Griffstruktur-Durchgänge (24) durch die Griffstruktur (20) aufweist, wobei die zwei länglichen der mehreren Griffstruktur-Durchgänge (24) parallel zueinander entlangeinander erstrecken.

7. Fahrradtasche nach Anspruch 5 oder 6, wobei sowohl das erste Schnellkupplungselement (30) als auch die Griffstruktur (20) gleichzeitig an der wenigstens einen Aufhängungslasche (2A, 2B) unter Verwendung der mehreren Befestigungsbolzen (7) durch überlappend angeordnete Kombinationen der länglichen Laschendurchgänge (4), der Griffdurchgänge (24) und der Bolzenlöcher (34) des ersten Schnellkupplungselements (30) befestigt werden können.

## Revendications

1. Une sacoche de bicyclette (101) comprenant au moins une sangle de suspension (2A, 2B),
dans laquelle la ou les sangles de suspension sont configurées pour assurer un état de fixation de la sacoche de bicyclette, dans laquelle la sacoche de bicyclette est fixée par rapport à un porte-bagages d'une bicyclette, de telle sorte que la sacoche de bicyclette, par l'intermédiaire de la ou des sangles de suspension (2A, 2B), est suspendue au porte-bagages, tandis que l'espace de rangement de la sacoche de bicyclette s'étend d'un côté latéral ou des deux côtés latéraux de la bicyclette,
dans laquelle la ou les sangles de suspension (2A, 2B) comprennent au moins deux paires de passages de sangle (3A, 3B, 3C, 3D), dans laquelle chacune desdites paires de passages de sangle comprend deux passages de sangle allongés (4) pratiqués à travers la ou les sangles de suspension (2A, 2B) et permettant à des moyens de fixation de traverser lesdits passages de sangle allongés, dans laquelle les deux passages de sangle (4) s'étendent parallèlement l'un à l'autre,
**caractérisée en ce que** la sacoche de bicyclette (101) comprend en outre un
premier élément de couplage rapide (30), qui comprend des trous de boulon (34) destinés à venir coïncider respectivement avec plusieurs desdits passages de sangle allongés (4), à fixer le premier élément de couplage rapide (30) à la ou les sangles de suspension (2A, 2B) à l'aide de boulons de fixation (7) traversant des regroupements des passages de sangle allongés (4) et les trous de boulon (34), coïncidant les uns avec les autres.
dans laquelle ledit premier élément de couplage rapide (30) fait partie d'un système de couplage rapide pour porte-bagages, ledit système de couplage rapide comprenant en outre un deuxième élément de couplage rapide, qui peut être intégré ou associé à divers types de porte-bagages, lesdits premier et deuxième éléments de couplage rapide étant conçus pour être rapidement couplés l'un à l'autre.

2. Une sacoche de bicyclette selon la revendication 1, dans laquelle le nombre desdites au moins deux paires de passages de sangle (3A, 3B, 3C, 3D) est au moins de quatre.

3. Une sacoche de bicyclette selon l'une quelconque des revendications 1 ou 2, dans laquelle la sacoche de bicyclette est une sacoche de bicyclette à un seul côté dans le sens où, dans ledit état de fixation de la sacoche de bicyclette, ledit espace de rangement de la sacoche de bicyclette s'étend seulement d'un des deux côtés latéraux de la bicyclette.

4. Une sacoche de bicyclette selon l'une quelconque des revendications 1 ou 2, dans laquelle la sacoche de bicyclette (101) est une sacoche de bicyclette à deux côtés dans le sens où, dans ledit état de fixation de la sacoche de bicyclette, ledit espace de rangement de la sacoche de bicyclette s'étend des deux côtés latéraux de la bicyclette, tandis que ladite ou lesdites sangles de suspension (2A, 2B) forment au moins un pont s'étendant entre des parties de la sacoche de bicyclette d'un côté latéral de la bicyclette et des parties de la sacoche de bicyclette de l'autre côté latéral de la bicyclette.

5. Une sacoche de bicyclette selon la revendication 4, comprenant en outre :
une structure de poignée (20), qui comprend une poignée (29) pour porter à la main la sacoche de bicyclette à deux côtés (101), et qui comprend en outre de multiples passages de structure de poignée (24) destinés à venir coïncider respectivement avec plusieurs desdits passages de sangle allongés (4), à fixer la structure de poignée (20) à la ou les sangles de suspension (2A, 2B) à l'aide de moyens de fixation (7) traversant des regroupements des passages de sangle allongés (4) et les passages de poignée (24), coïncidant les uns avec les autres.

6. Une sacoche de bicyclette selon la revendication 5, dans laquelle la structure de poignée (20) comprend au moins deux paires de passages de structure de poignée (23A, 23B, 23C, 23D), dans laquelle chacune desdites paires de passages de structure de poignée possède deux desdits passages de structure de poignée (24) allongés pratiqués à travers la structure de poignée (20), dans laquelle les deux desdits passages de structure de poignée (24) allongés s'étendent parallèlement l'un à l'autre.

7. Une sacoche de bicyclette selon la revendication 5 ou 6, dans laquelle le premier élément de couplage rapide (30) et la structure de poignée (20) peuvent être fixés simultanément à la ou les sangles de suspension (2A, 2B) à l'aide desdits boulons de fixation (7) traversant des regroupements des passages de sangle allongés (4), les passages de poignée (24), et les trous de boulon (34) du premier élément de couplage rapide (30), coïncidant les uns avec les autres.
